# EUROPEAN PATENT APPLICATION

(11) **EP 1 408 074 A1**
(43) Date of publication of application: **14.04.2004**
(21) Application number: 03021638.6
(22) Date of filing: 26.09.2003
(51) Int. Cl.: C08K 3/34, C08L 23/28, C08L 23/22

(54) **Filled elastomeric butyl compounds**

(30) Priority: 09.10.2002 CA 2406895
(71) Applicant: Bayer Inc., Sarnia, ON N7T 7M2 (CA)
(72) Inventor: Pazur, Richard, Sarnia, ON N7S 3E5 (CA)
(74) Representative: Feldhues, Michael L.F., Dr.

(57) **Abstract**

The present invention relates to a rubber compound comprising at least one solid, optionally halogenated, butyl elastomer and at least one nanoclay that have decreased die swell and mill shrinkage, improved extrusion rates and hot air aging resistance in particular compound comprising bromobutyl elastomers and a process for the manufacturing of said compounds.

## Description

### Field of the Invention

The present invention relates to a rubber compound comprising at least one solid, preferably halogenated, butyl elastomer and at least one nanoclay that have decreased die swell and mill shrinkage, improved extrusion rates and hot air aging resistance, in particular compound comprising bromobutyl elastomers.

### Background of the invention:

It is known that reinforcing fillers such as carbon black and silica greatly improve the strength and fatigue properties of elastomeric compounds. It is also known that chemical interaction occurs between the elastomer and the filler. For example, good interaction between carbon black and highly unsaturated elastomers such as polybutadiene (BR) and styrene butadiene copolymers (SBR) occurs because of the large number of carbon-carbon double bonds present in these copolymers. Butyl elastomers may have only one tenth, or fewer, of the carbon-carbon double bonds found in BR or SBR, and compounds made from butyl elastomers are known to interact poorly with carbon black.

Nanoclays are processed nanometer-scale clays having nanometer-thick platelets that can be modified to make the clay complexes compatible with organic monomers and polymers. Typically nanoclays are processed natural smectite clays, such as sodium or calcium montmorillonite, which have been the first choice for producing nanoclays, due to their availability, easy extraction, and relatively low cost. The heterogeneity of natural clay can be a problem, however. This can be overcome by using synthetic clays such as hydrotalcite and laponite. They may or may not be organically treated to provide "gallery spacing" and to promote compatibility with the resin of choice. Most treatments include onium ion substitution reactions and/or the dipole moment modification.

Nanoclays are expanding clays. The structure and chemical makeup of expanding clays means that individual platelets will separate from each other to interact with some swelling agent, typically water.

Cloisite® nanoclays are produced by Southern Clay Products, Inc., of Texas, USA. They are high aspect ratio additives based on montmorillonite clay.
PCT Patent Application WO-98/56598-A1 discloses barrier coating mixtures contain in a carrier liquid (a) an elastomeric (preferably butyl-containing) polymer; (b) a dispersed exfoliated layered filler having an aspect ratio greater than 25; and (c) at least one surfactant, wherein the solids content of the mixture is less than 30 % and the ratio of polymer (a) to filler (b) is between 20:1 and 1:1. However, the present invention teaches solid elastomeric polymers and does not require use of surfactants. The absence of water means that individual platelets will not necessarily separate from each other to interact with water instead of the polymer. Additionally, the use of solid polymers significantly decrease the cost of the manufacturing process.

### Summary of the Invention:

The present invention provides a rubber compound comprising at least one solid, optionally halogenated, butyl elastomer and at least one nanoclay. Those compounds have improved properties when compared to known filled rubber compositions with respect to extrusion rates and decreased die swell and mill shrinkage.

Of particular interest are rubber compounds comprising at least one bromobutyl elastomer. It is furthermore preferred that the nanoclay is based on a smectite clay, in particular a montmorillonite clay, even more preferred are Cloisite® nanoclays.

Accordingly, in a further aspect the present invention provides a process which comprises mixing at least one solid, optionally halogenated, butyl elastomer with at least one nanoclay, especially a nanoclay based on a smectite clay, in particular a montmorillonite clay, even more preferred a Cloisite® nanoclay, optionally in the presence of a curing system and/or further additives, extruding the compound and curing the resulting shaped filled, optionally halogenated, butyl elastomer. The curable compound, having improved processability and heat aging properties forms another aspect of the invention.

### Detailed Description of the Invention

The phrase "halogenated butyl" or "halobutyl elastomer(s)" as used herein refers to a chlorinated or brominated butyl elastomer. Brominated butyl elastomers are preferred, and the invention is illustrated, by way of example, with reference to such bromobutyl elastomers. It should be understood, however, that the invention extends to the use of non-halogenated or chlorinated butyl elastomers.

Thus, optionally halogenated, butyl elastomers suitable for use in the practice of this invention include, but are not limited to, brominated butyl elastomers. Such elastomers may be obtained by bromination of butyl rubber which is a copolymer of isobutylene and one or more co-monomers, usually a C₄ to C₆ conjugated diolefin, preferably isoprene, alkyl-substituted vinyl aromatic co-monomers such as C₁-C₄-alkyl substituted styrene. An example of such an elastomer which is commercially available is brominated isobutylene methylstyrene copolymer (BIMS) in which the co-monomer is p-methylstyrene.

Brominated butyl elastomer typically contains from 1 to 3 weight percent of isoprene and from 97 to 99 weight percent of isobutylene (based upon the hydrocarbon content of the polymer) and from 1 to 4 weight percent bromine (based upon the bromobutyl polymer). A typical bromobutyl polymer has a molecular weight, expressed as the Mooney viscosity (ASTM D1646, ML 1 + 8 at 125°C), of from 28 to 55.

For use in the present invention the optionally brominated butyl elastomer preferably contains in the range of from 1 to 5 weight percent of isoprene and from 95 to 99 weight percent of isobutylene (based upon the hydrocarbon content of the polymer) and from 0.5 to 2.5 weight percent, preferably from 0.75 to 2.3 weight percent, of bromine (if halogenated and based upon the brominated butyl polymer).

It is preferred not to use mixtures with other elastomers but to use the optionally halogenated butyl elastomer as the sole elastomer. If mixtures are to be used, however, then the other elastomer may be, for example, natural rubber, polybutadiene, styrene-butadiene or poly-chloroprene or an elastomer compound containing one or more of these elastomers.

Examples of suitable butyl elastomers include Bayer Butyl® 100, Bayer Butyl® 101-3, Bayer Butyl® 301, and Bayer Butyl® 402 commercially available from Bayer Inc. Bayer Butyl® 301 has a Mooney viscosity (ML 1+8 @ 125°C) of 51 ± 5 MU, an residual double bond content of 1.85 mol% and an average molecular weight (Mw) of 550,000 grams per mole. Bayer Butyl® 402 has a Mooney viscosity (ML 1+8 @ 125°C) of 33 ± 4 MU, an residual double bond content of 2.25 mol% and an average molecular weight (Mw) of 430,000 grams per mole.

Examples of suitable brominated butyl elastomers include Bayer Bromobutyl® 2030, Bayer Bromobutyl© 2040 (BB2040), and Bayer Bromobutyl® X2 commercially available from Bayer Inc.. Bayer BB2040 has a Mooney viscosity (ML 1+8 @ 125°C) of 39 ± 4 MU, a bromine content of 2.0 ± 0.3 wt% and an average molecular weight of 500,000 grams per mole.

The present invention is not limited to a special nanoclay. Thus, any nanoclay known by the skilled in the art should be suitable. However, natural powdered, optionally modified with organic modifiers, smectite clays, such as sodium or calcium montmorillonite, or synthetic clays such as hydrotalcite and laponite are preferred. Powdered montmorillonite clays that have been modified with organic modifiers are even more preferred such as montmorillonite clays modified with halogen salts of (CH₃)₂N⁺(HT)₂, where HT is hydrogenated Tallow (∼65% C₁₈; ∼30% C₁₆; ∼5% C₁₄) or (CH₃)₂N⁺(CH₂-C₆H₅)(HT), where HT is hydrogenated Tallow (∼65% C₁₈; ∼30% C₁₆; ∼5% C₁₄). These preferred clays are available as Cloisite® clays 10A, 20A, 6A, 15A, 30B, 25A.

The inventive compound comprises in the range from 0.01 to 10 phr (per hundred parts of rubber) of nanoclay(s), preferably from 1-5 phr, more preferably from 2-4 phr of nanoclay(s).

The inventive compound preferably further comprises at least one filler such as carbon black and/or mineral fillers such as silica, silicates, clay (such as bentonite), gypsum, alumina, aluminum oxide, magnesium oxide, calcium oxide, titanium dioxide, talc and the like, as well as mixtures thereof.

Preferred mineral fillers have a mean agglomerate particle size between 1 and 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover has a BET surface area, measured in accordance with DIN (Deutsche Industrie Norm 66131), of between 50 and 450 square meters per gram and a DBP absorption, as measured in accordance with DIN 53601, of between 150 and 400 grams per 100 grams of silica, and a drying loss, as measured according to DIN ISO 787/11, of from 0 to 10 percent by weight. Suitable silica fillers are available under the trademarks HiSil® 210, HiSil® 233 and HiSil 243 from PPG Industries Inc. Also suitable are Vulkasil® S and Vulkasil® N, from Bayer AG.

Preferred carbon blacks are those prepared by the lamp black, furnace black or gas black process and have preferably BET (DIN 66 131) specific surface areas in the range of from 20 to 200 m²/g, e.g. SAF, ISAF, HAF, FEF or GPF carbon blacks.

The amount of filler to be incorporated into the inventive compound can vary between wide limits. The filler(s) are preferably present in an amount in the range from 20-200 phr, more preferably 50-150 phr. It might be advantageous to use a mixture of carbon black(s) and mineral filler(s).

The filled compound can be cured to obtain a product, which has improved properties, for instance in heat aging. Curing can be effected with high-energy radiation or a curative, such as sulfur. The preferred amount of sulfur is in the range from 0.3 to 2.0 phr (parts by weight per hundred parts of rubber). An activator, for example zinc oxide, may also be used, in an amount in the range of from 5 parts to 0.5 parts by weight. Other ingredients, for instance stearic acid, rosins (e.g. Pentalyn® of Hercules Inc., USA), oils (e.g. Sunpar® of Sunoco), antioxidants, or accelerators (e.g. a sulfur compound such as dibenzothiazyldisulfide (e.g. Vulkacit® DM/C of Bayer AG) may also be added to the compound prior to curing. Sulphur curing is then effected in the known manner. See, for instance, chapter 2, "The Compounding and Vulcanization of Rubber", of "Rubber Technology", 3^{rd} edition, published by Chapman & Hall, 1995, the disclosure of which is incorporated by reference.

Other curatives known to cure halobutyl elastomers may also be used. A number of compounds are known to cure BIIR such as bis dieneophiles (for example HVA#2 = m-phenylene-bis-maleimide), phenolic resins, amines, amino-acids, peroxides, zinc oxide and the like. Combinations of the aforementioned curatives may also be used.

A stabilizer may be added to the brominated butyl elastomer. Suitable stabilizers include calcium stearate and epoxidized soy bean oil, preferably used in an amount in the range from 0.5 to 5 parts by weight per 100 parts by weight of the halogenated butyl rubber.

The preferably halogenated butyl elastomer, nanoclay, optionally filler and additives are mixed together, suitably at a temperature in the range of from 25 to 200°C. It is preferred that the temperature in one of the mixing stages be greater than 60°C, and a temperature in the range from 90 to 150°C is particularly preferred. Normally the mixing time does not exceed one hour; a time in the range from 2 to 30 minutes is usually adequate. It is advantageous to mix the butyl elastomer and nanoclay for at least 2 minutes before any other component is added. The mixing is suitably carried out on a two-roll mill mixer, which provides good dispersion of the filler within the elastomer. Mixing may also be carried out in a Banbury mixer, or in a Haake or Brabender miniature internal mixer. An extruder also provides good mixing, and has the further advantage that it permits shorter mixing times. It is also possible to carry out the mixing in two or more stages. Further, the mixing can be carried out in different apparatuses, for example one stage may be carried out in an internal mixer and another in an extruder.

The order of addition of the different components to the rubber masterbatch is not critical, however, it might be advantageous to add the curatives in the last mixing step to prevent unwanted preliminary cross-linking (scorch).

The combination of the preferably halogenated butyl elastomer(s) with the nanoclay(s) results in improved properties for the filled compounds. These improved properties include lower die swell, less mill shrinkage, faster extrusion times and improved heat aging combined with a lower Mooney scorch (scorch is the unwanted preliminary cross-linking of the compound during handling). These render the cured compounds particularly suitable for a number of applications including, but not limited to, use in tire treads and tire sidewalls, tire innerliners, tank linings, hoses, rollers, conveyor belts, curing bladders, gas masks, pharmaceutical enclosures and gaskets.

The invention is further illustrated in the following examples and the accompanying figures.

### Examples:

### Description of tests:

### Cure rheometry:

Vulcanization was followed on a Moving Die Rheometer (MDR 2000(E)) using a frequency of oscillation of 1.7 Hz and a 3°arc at 166°C for 30 minutes total run time. The test procedure follows ASTM D-5289.

### Compound Mooney Viscosity and Scorch.

A large rotor was used for these tests and ASTM method D-1646 was followed. The compound Mooney viscosity was determined at 100°C by preheating the sample 1 minute and then, measuring the torque (Mooney viscosity units) after 4 minutes of shearing action caused by the viscometer disk rotating at 2 r.p.m.. Mooney scorch measurements taken as the time from the lowest torque value to a rise of 5 Mooney units (t05) were carried out at 125 ºC.

### Stress-strain.

Samples were prepared by curing a macro sheet at 166ºC for 30 minutes, after which the appropriate sample was died out into standard ASTM die C dumbells. The test was conducted at 23 ºC and conforms to ASTM D-412 Method A.

### Hot air aging/stress-strain :

Vulcanized dumbell die C samples were aged for 168 hrs in a hot air oven at 120°C and then tested at 23°C. This test complies with ASTM D-573.

### Hardness:

All hardness measurements were carried out with an A-2 type durometer following ASTM D-2240 requirements

### Mill Shrinkage.

This test complies with ASTM D-917, Method B. The test is performed at 50°C (roll temperature) for 70g of halobutyl sample.

### Haake Extrusion with Garvey die: ¾" diameter screw and 10" screw length.

The barrel temperature was set at 100°C while the Garvey die was at 105°C. The single screw was turning at 45 r.p.m.. Testing was carried out according to ASTM D-2230.

### Description of Ingredients and General Mixing Procedure:

Cloisite® 10A, 20A, 6A - Montmorillonite ― organically modified - products of Southern Clays
Cloisite® NA+ - Montmorillonite - not organically modified - a product of Southern Clays
Bayer® Bromobutyl 2030 - brominated butyl by Bayer Inc.
Sunpar® 2280 - paraffinic oil produced by Sun Oil.
Pentalyn® A -Synthetic Resin by Hercules, Inc.
Stearic acid Emersol 132 NF - stearic acid by Acme-Hardesty Co. Carbon Black, N 660 - carbon black by Cabot Corp.
Vulkacit DM/C - dibenzothiazyldisulfide (MBTS) by Bayer AG Sulfur NBS - sulfur by N.I.F.T.
Kadox® 920 grade PC 216 - zinc oxide by St. Lawrence Chem. Inc.

The brominated butyl elastomer and the nanoclay were mixed in a 1.57 liter Banbury internal tangential mixture with the Mokon set to 30 °C and a rotor speed of to 77 RPM for 2 minutes. Carbon black, Pentalyn®, stearic acid, Sunpar®, and Vulkacit® were then added to the compound and the compound was mixed for another 4 minutes. To the cooled sample, sulfur NBS and Kadox® was added on a 10" x 20" mill at 30°C with the Mokon set to 30 °C. Several three quarter cuts were performed to homogenize the curatives into the masterbatch followed by six end-wise passes of the compound.

### Example 1

Nine batches were prepared according to Table 1. Example 1 a is a comparative example.

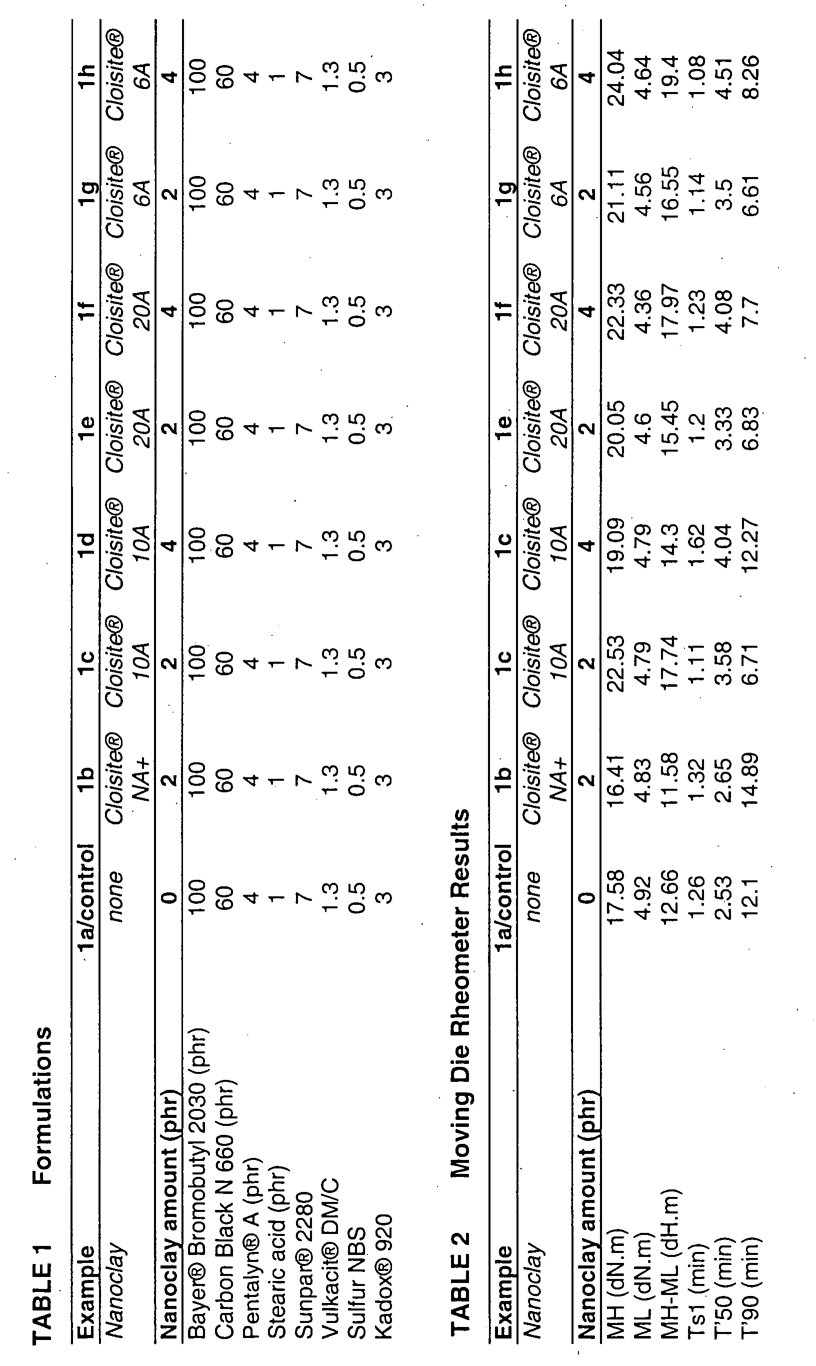

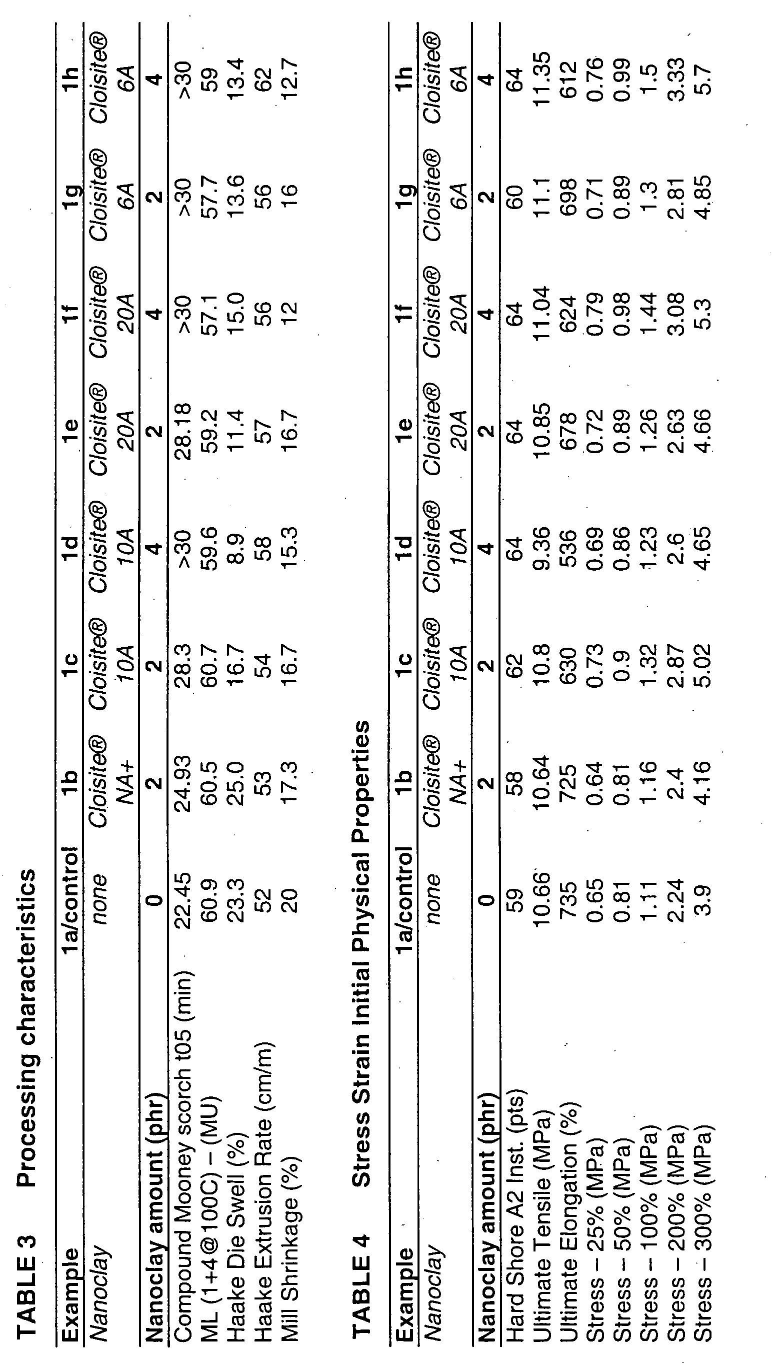

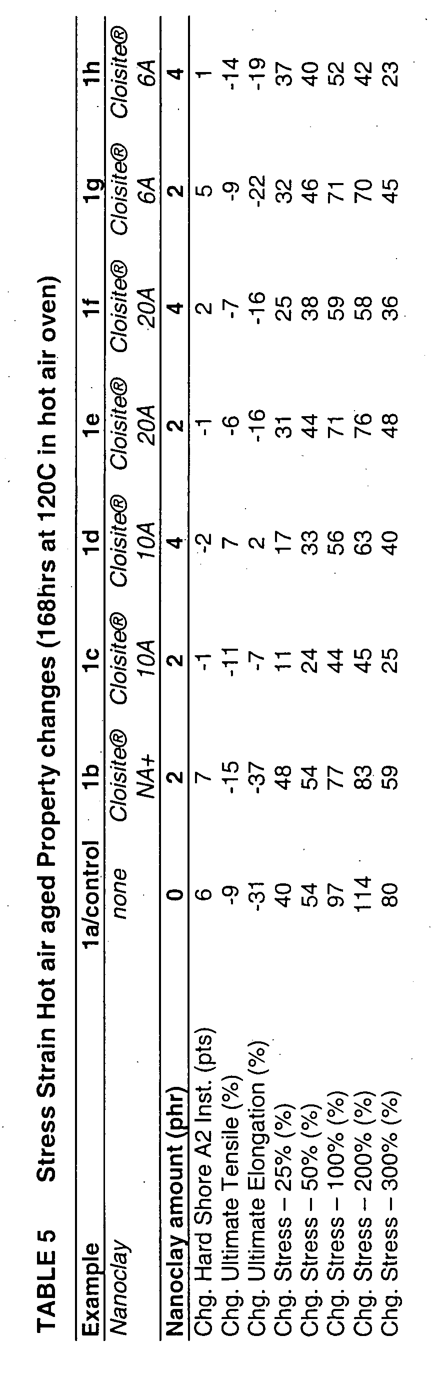

The data in Table 2 clearly shows the effect of adding nanoclay to the brominated butyl elastomer batch, especially when compared to the control compound 1a. All maximum torque values increase upon clay addition (1 c through 1 h) showing an important reinforcing effect of the nanoclays. It can be seen that organic modification of the nanoclays is important as the Cloisite Na+ does not provide additional reinforcement. At the same time, minimum torques values for compounds containing Cloisites 10A, 20A and 6A are slighty lower compared to both the control 1 a and the Cloisite Na+ containing compound 1 b. Lower minimum torques are indicative of a better compound flow before the onset of vulcanization. Delta torque values are all larger in magnitude for compounds 1c - 1 h compared to the control compound 1 a and 1 b and take into account the increased compound flow before vulcanization and the higher level of reinforcement caused by the nanoclays.

The data in Table 3 clearly shows the processing benefits of nanoclay addition to the brominated butyl elastomer batch compared to the control 1 a and compound 1 b. Compound Mooney Scorch is actually lengthened by at least 5 minutes by nanoclay addition. Clay addition addition would help prevent any prevulcanization that could take place during moulding or extruding. Compound Mooney viscosities are slightly lower upon nanoclay addition (compounds 1d - 1 h) with the biggest effects (5% reduction) seen with 4 phr of Cloisite 20A (compound 1 f) and 2 phr of Cloisite 6A (compound 1 g). Lower compound Mooney viscosities are indicative of better processing. Haake extrusion rates are quicker by nanoclay addition with improvements of up to 19% compared to the control and compound 1 b when 4 phr of Cloisite 6A is added to the bromobutyl masterbatch (compound 1 h). Faster extrusion rates are advantageous for better increased overall production capabilities. Haake extrusion Garvey die swells are clearly improved upon nanoclay addition with a die swell reduction of 35 to 62 % compared to both compounds 1 a and 1b. 4 phr of Cloisite 6A addition provided the most die swell improvement. Die swell is undesirable during extrusion and any reduction of this phenomenon would be beneficial to the process. The magnitude of mill shrinkage was also decreased by nanoclay addition. Improvements anywhere from 15 to 40% less mill shrinkage was observed. 4 phr of Cloisite 20A (compound 1f) provided the biggest reduction in compound mill shrinkage. A reduction in mill shrinkage is important, for example, in tire building, especially when splicing is required between two compound ends.

Table 4 illustrates the effects of nanoclay addtion in the bromobutyl masterbatch on initial physical properties. It is important to note the non reinforcing effect of Cloisite Na+ in the bromobutyl masterbatch (compound 1b) as for all intents and purposes, its initial physical properties are the same as the control compound. Nanoclay addition (Cloisites 10A, 20A and 6A) causes a slight hardening and stiffening of the compound as seen by the higher hardness and moduli values (compounds 1c - 1h). A small reduction in elongation is noted with very little effect seen on tensile values.

The effect of nanoclay addition in the bromobutyl masterbatch on stress strain hot air aging is illustrated in table 5. It can be observed that nanoclay addition (compounds 1c - 1h) produces minimal changes in the hardness upon aging, preventing the hardening of the bromobutyl compound. At the same time, lower change in stress values are seen in all nanoclay compounds compared to the control. Elongation changes are also lower in the nanoclay compounds with the best hot air resistance shown by Cloisite 10A (compounds 1c and 1d). Rubber degradation brought about by heat aging is always a concern in any rubber compound because of the corresponding loss of mechanical properties which limits the functional life of the final rubber part. The improved heat resistance provided by nanoclay addition is considered as important asset, extending the life of the rubber compound.

## Claims

1. A rubber compound comprising at least one solid optionally halogenated butyl elastomer and at least one nanoclay.

2. A compound according to claim 1, wherein the butyl is a halogenated butyl elastomer.

3. A compound according to claim 2, wherein the halogenated butyl is a brominated butyl elastomer.

4. A compound according to any of claims 1 to 3 wherein the nanoclay is a montmorillonite that optionally has been organically modified.

5. A compound according to any of claims 1-4 wherein the nanoclay has been organically modified.

6. A compound according to any of claims 1-5 wherein the compound comprises in the range from 0.01 - 10 phr of nanoclay(s).

7. A compound according to any of claims 1 to 6 wherein the compound further comprises a curing system.

8. A compound according to claim 7 wherein the curing system comprises sulfur and/or a sulfur compound.

9. A process for preparing a compound according to any of claims 1-8, wherein the nanoclay is admixed with the optionally halogenated butyl elastomer and optionally further components.

10. A process according to claim 9, wherein the compound is vulcanized subsequent to mixing.
